# FASCICULE DE BREVET EUROPEEN

(11) **EP 0 555 601 B1**
(45) Date de publication et mention de la délivrance du brevet: **02.11.1995**
(21) Numéro de dépôt: 92401681.9
(22) Date de dépôt: 17.06.1992
(51) Int. Cl.: F16M 13/02, E05B 73/00

(54) **Ensemble-support pour poste de télévision**
Tragvorrichtung für einen Fernsehapparat
Supporting assembly for a T.V.-set

(30) Priorité: 14.02.1992 FR 9201690
(43) Date de publication de la demande: 18.08.1993
(73) Titulaire: EUREX, 76260 EU (FR)
(72) Inventeur: Biehler, Patrick, F-75005 Paris (FR)
(74) Mandataire: Peuscet, Jacques

(56) Documents cités:
- FR-A- 2 635 662
- FR-A- 2 643 690
- US-A- 3 514 172
- US-A- 4 579 311
- US-A- 4 613 109

## Description

La présente invention concerne un ensemble-support pour poste de télévision comportant un dispositif de fixation rendant le montage définitif ou ne permettant un démontage qu'avec un outil spécifique.

Les postes de télévision sont en général fixés sur une platine, laquelle platine est fixée sur un meuble ou sur un bras lui-même fixé sur un bâti ; c'est le cas notamment des postes de télévision à disposition du public dans des communautés telles que hôpitaux, clubs, hôtels et analogues. Il est bien connu que dans de telles communautés les postes de télévision sont fréquemment dérobés et il est particulièrement utile que la fixation du poste empêche le vol ou, pour le moins, le rende difficile.

On a déjà proposé des ensembles-supports pour poste de télévision comportant des dispositifs de fixation ne permettant un démontage qu'avec un outil spécifique ; un tel ensemble-support est par exemple décrit dans le brevet d'invention FR-A-2 643 690 et comporte une platine sur laquelle est fixé le soubassement de l'ébénisterie du poste de télévision, ladite platine et ledit soubassement étant solidarisés par des dispositifs de fixation ne permettant un démontage qu'avec un outil spécifique, ladite platine étant par ailleurs solidarisée avec un organe porteur, également au moyen d'un dispositif de fixation ne permettant un démontage qu'avec un outil spécifique.

La présente invention concerne le dispositif de fixation solidarisant la platine avec l'organe porteur et a pour objet un dispositif de fixation plus simple et plus rapide à mettre en oeuvre que celui décrit dans le brevet cité ci-dessus, tout en étant aussi efficace ; le dispositif de fixation, selon la présente invention, présente en outre l'avantage de rendre le montage définitif ou de ne permettre le démontage qu'avec un outil spécifique.

L'ensemble-support, selon l'invention, présente en outre l'avantage que le dispositif de fixation est utilisé également pour la sécurité de la solidarisation de l'organe-porteur avec un bâti.

On a déjà propose, par exemple selon US-A-4 579 311, d'utiliser un ensemble-support dans lequel un seul élément assure la sécurité à la fois de la fixation sur un organe porteur de l'appareil à supporter et de la fixation de l'organe porteur à un bâti, l'organe porteur étant un tube dont les deux extrémités sont ouvertes et permettent le passage d'un moyen de blocage prévu en forme de tige.

L'invention a pour objet un ensemble-support de ce type dans lequel la solidarisation du poste de télévision à l'organe porteur est réalisée à l'aide du seul dispositif de fixation ci-dessus, ce qui est avantageux sur le plan de son prix de revient et facilite le montage de l'ensemble.

Ainsi, selon l'invention, un ensemble-support pour poste de télévision solidarisé à un organe porteur, comportant une plaque-support destinée à être fixée sur un bâti par des moyens de maintien susceptibles d'être démontés lorsqu'ils sont accessibles, une plaque-verrou, liée mécaniquement à la plaque-support, et susceptible d'être bloquée par un moyen de blocage par rapport à la plaque-support et pouvant, en l'absence du blocage, être déplacée par rapport à ladite plaque-support, ce déplacement établissant ou supprimant l'accessibilité aux moyens de maintien, la position de blocage de la plaque-verrou correspondant à la suppression de cette accessibilité par dissimulation des moyens de maintien, l'organe-porteur étant un tube dont les deux extrémités sont ouvertes et permettent le passage du moyen de blocage prévu en forme de tige pour le blocage de la plaque-verrou, l'organe-porteur étant solidaire de l'une des plaques, la plaque-support ou la plaque-verrou, est caractérisé par le fait qu'en position de blocage, l'organe de blocage en forme de tige est en butée d'un côté avec le bâti ou la plaque-support, et de l'autre côté avec un embout emmanché dans l'extrémité ouverte du tube opposée à l'extrémité par laquelle le tube est solidarisé à l'une des plaques, la plaque-support ou la plaque-verrou, l'embout étant fixé au tube par un dispositif de fixation, l'ensemble-support comportant une platine portant le poste de télévision et susceptible de pivoter autour de l'axe d'un fourreau solidaire de l'organe porteur, la solidarisation de la platine avec ledit organe porteur étant assurée au moyen du dispositif de fixation, la platine étant équipée d'un manchon susceptible de tourillonner dans le fourreau, ledit fourreau étant prévu dans l'embout.

Selon une première forme de réalisation, l'organe-porteur est solidaire de la plaque-support. La plaque-support et la plaque-verrou comportent chacune des orifices susceptibles de venir en vis-à-vis quand la plaque-verrou n'est pas en position de blocage et permettent, alors, l'accessibilité aux moyens de maintien ; les orifices de la plaque-verrou sont en vis-à-vis d'une zone de la paroi de la plaque-support lorsque la plaque-verrou est en position de blocage ; les moyens de maintien de la plaque-support sont placés au droit des orifices de la plaque-support, les moyens de maintien et les orifices étant situés de part et d'autre de la plaque-verrou ; de préférence, la plaque-support est un profilé en forme de U dont l'âme porte les orifices et dont les ailes se prolongent par des retours en équerre par lesquels la plaque-support est fixée au bâti, lesdits retours en équerre comportant des trous de fixation avec lesquels coopérent les moyens de maintien, les trous et les orifices étant en vis-à-vis les uns des autres.

Selon une forme préférée de réalisation, la plaque-verrou est en deux pièces. Chacune des deux pièces comprend deux portions décalées selon l'axe du tube, l'une des portions portant le premier orifice étant proche de l'âme de la plaque-support et l'autre portion portant le second orifice étant proche des retours en équerre de la plaque-support. Chacune des deux portions proches de l'âme de la plaque-support se prolonge selon un retour, parallèle à l'axe du tube, s'étendant jusqu'au droit du bord extérieur du retour en équerre de la plaque-support.

Selon une deuxième forme de réalisation, l'organe-porteur est solidaire de la plaque-verrou.

La plaque-support est de forme générale en U dont l'âme est percée de trous de fixation et se prolonge latéralement par deux ailes elles-mêmes prolongées par des retours parallèles à l'âme, les prolongements et l'âme constituant des glissières adaptées à recevoir à coulissement la plaque-verrou ; un retour à angle droit de l'âme ferme lesdites glissières lorsque la plaque-verrou est montée dans la plaque-support ; la plaque-verrou porte un rebord venant s'appuyer sur la face en bout de la plaque-support ; la plaque-verrou est pleine et ne comporte qu'un passage prévu, à l'intérieur de la zone où elle est raccordée par soudage à l'organe-porteur, pour le passage de la tige de blocage.

Pour fixation sur un bâti horizontal, le tube comprend deux portions formant un angle entre elles : une portion solidaire de la plaque-support ou de la plaque-verrou et une portion dont l'extrémité porte l'embout ; l'organe de blocage est en deux pièces, une première pièce verrouillant le déplacement latéral relatif des plaques grâce à une cale solidaire de la plaque-support, et une deuxième pièce verrouillant la première pièce par coopération avec l'embout et la paroi intérieure de la portion du tube, un passage ménagé dans le tube permettant le montage de la première pièce et étant obstrué par la deuxième pièce lorsque l'ensemble est monté.

Le verrou peut être uniquement doté d'un pêne, sollicité élastiquement en position sorti, en sorte que la fixation est définitive ; le verrou peut recevoir un barrillet monté à rotation pour l'actionnement du pêne à l'aide d'une clef, en sorte que le démontage n'est possible qu'à l'aide de l'outil spécifique que constitue ladite clef.

Avantageusement l'ensemble-support est équipé d'un manchon cylindrique comportant une partie de plus petit diamètre que le diamètre du reste du manchon dans laquelle peut se loger le pêne, la butée étant définie par l'une des faces perpendiculaires à l'axe de raccordement de cette partie de plus petit diamètre avec le reste du manchon ; des orifices sont prévus dans la paroi du tube, disposés au droit, respectivement, du fourreau et de l'alésage, lorsque l'embout est monté à l'extrémité du tube. L'axe de l'alésage est parallèle à l'axe du fourreau et les orifices, dans la paroi du tube, sont respectivement disposés de part et d'autre de l'axe du tube. La paroi du tube est pleine et ne comporte que ces deux orifices ; la section dudit tube est rectangulaire.

Pour mieux faire comprendre l'objet de l'invention, on va décrire ci-après, à titre purement illustratif et non limitatif, un mode de réalisation représenté sur le dessin annexé.

Sur ce dessin :
- la figure 1 représente, en perspective, la partie de l'ensemble-support de poste de télévision fixé sur un bâti vertical, la plaque-verrou, en deux pièces, étant dans la position de non blocage ;
- la figure 2 représente, en coupe, la partie de l'ensemble-support représentée figure 1, selon II-II de la figure 1.
- la figure 3 est analogue à la figure 1, mais la plaque-verrou, en deux pièces, est dans la position de blocage ;
- la figure 4 montre, en coupe, l'autre partie de l'ensemble-support ;
- la figure 5 montre une coupe selon V-V de la figure 4 ;
- la figure 6 montre, en coupe, l'embout seul, destiné à être emmanché dans l'organe porteur en forme de tube ouvert ;
- la figure 7 est une coupe selon VI-VI de la figure 6 ;
- la figure 8 représente partiellement, en perspective éclatée, une variante de fixation de l'ensemble-support sur un bâti vertical ;
- la figure 9 représente, en coupe partielle, l'application à une fixation sur un bâti horizontal.

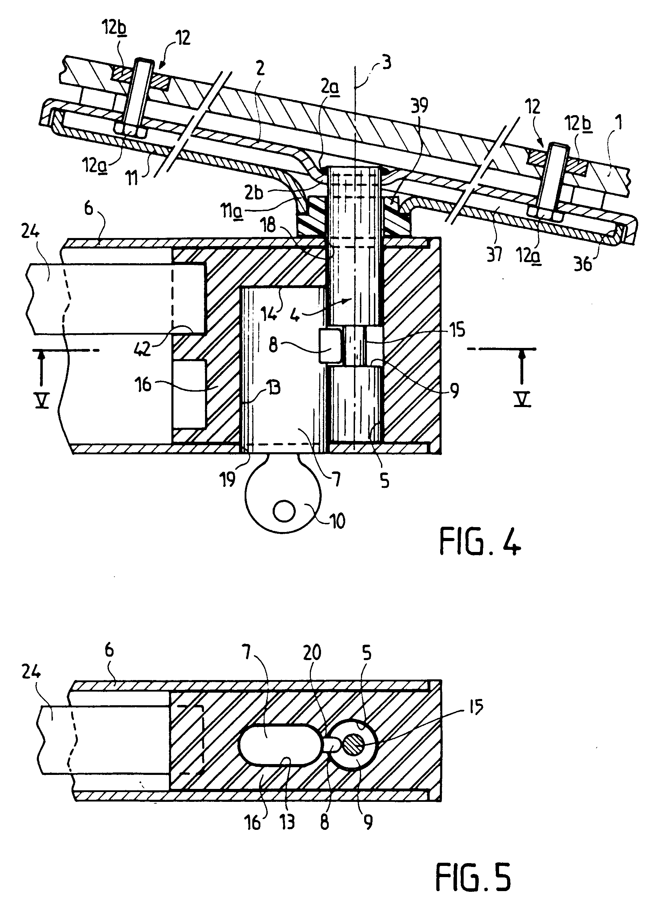

En se reportant à la figure 4, l'ensemble-support de télévision comporte une platine 2 ; la platine 2 est elle-même fixée sur un organe porteur 6 par un dispositif de fixation 7-8-9. On voit sur cette figure que la platine 2 est munie en son centre d'un orifice 2a, qui est bordé par un collet matricé 2b dans lequel est soudé un manchon cylindrique 4. Ledit manchon 4 est disposé de façon que son axe 3 soit vertical, et la platine 2 est légèrement inclinée par rapport à un plan horizontal. L'organe porteur 6 porte à son extrémité libre un fourreau cylindrique 5, qui est disposé autour du manchon 4, coaxialement à celui-ci. Le manchon 4 peut tourillonner librement à l'intérieur du fourreau 5.

Le poste de télévision 1 est fixé par son soubassement à la platine 2 par des éléments de solidarisation classiques désignés dans leur ensemble par 12. La platine 2 étant généralement rectangulaire, elle est généralement fixée par quatre dispositifs 12 de fixation classiques disposés à chacun des angles. Chaque dispositif de fixation 12 comporte un écrou 12b qui est sous forme d'insert dans le soubassement du poste 1, et qui est taraudé ; une vis comportant une tête 12a est vissée dans l'écrou 12b.

Pour rendre inaccessibles les dispositifs de fixation classiques 12, une contre-platine 11 est disposée, suivant l'axe 3, entre la platine 2 et l'organe porteur 6 ; la contre-platine 11 s'étend généralement dans un plan parallèle à celui de la platine 2 en recouvrant les dispositifs de fixation 12, notamment les têtes de vis 12a ; à sa périphérie, la contre-platine 11 présente des rebords 36 dirigés vers la platine 2 constituant ainsi un volume 37 dans lequel se trouvent enfermées les têtes de vis 12a, la platine 2 reposant, lorsque l'ensemble est monté, sur les rebords 36, la contre-platine comportant un collet matricé 11a muni d'un perçage traversé par le manchon 4, le collet matricé 11a reposant, par l'intermédiaire d'une rondelle d'appui 39, sur la face supérieure de l'organe-porteur bordant le fourreau 5.

Le manchon 4 comporte une partie 15 de plus petit diamètre que le diamètre du reste du manchon, découvrant une face plane 9 perpendiculaire à l'axe 3 ; un verrou 7 est logé dans un alésage 13 de l'organe-porteur 6 ; le verrou 7 et l'alésage 13 sont cylindriques et s'étendent parallèlement à l'axe 3 ; leur section est oblongue, comme celà est visible sur la figure 5 ; le verrou 7, dans l'exemple représenté, est un verrou à clef 10 classique, laquelle clef 10, lorsqu'elle est manoeuvrée, fait entrer ou sortir du verrou 7 un pêne 8 ; une ouverture 20, mieux visible sur la figure 5, fait communiquer le fourreau 5 et l'alésage 13, et permet le passage du pêne 8 qui, lorsque le verrou 7 et le manchon 4 sont en place, s'étend dans le fourreau 5, au droit de la partie 15 de plus petit diamètre du manchon 4.

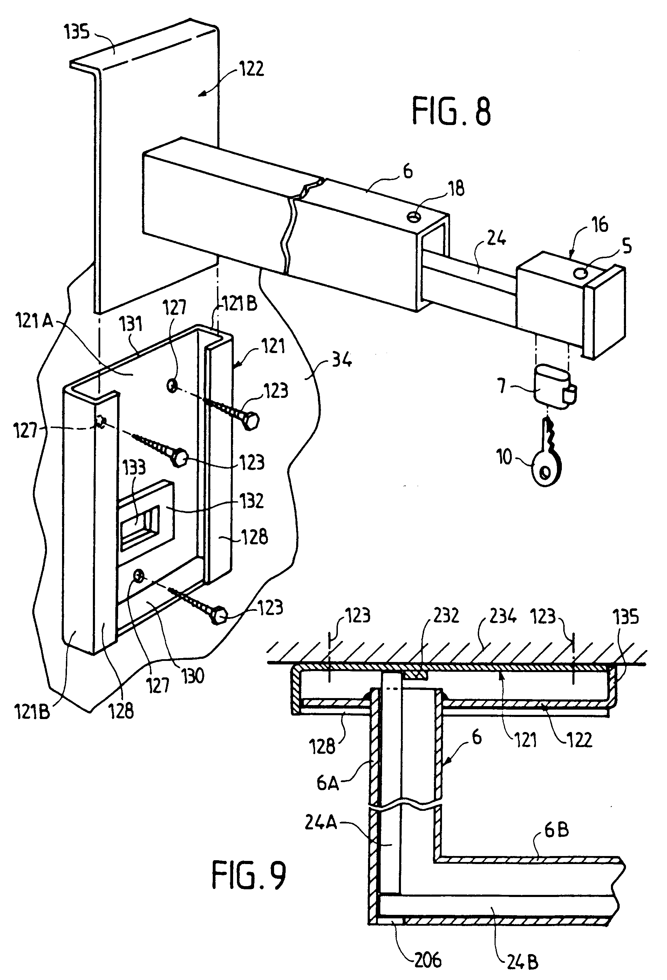

Dans l'exemple représenté, l'organe porteur 6 est un tube ouvert aux deux extrémités et de section rectangulaire ; un embout 16, par exemple en matière plastique, est emmanché dans l'extrémité du tube 6 ; un tel embout 16 est représenté seul sur les figures 6 et 7 ; le fourreau 5 est prévu dans l'embout 16, un orifice 18 dans la paroi du tube 6 permettant le montage du manchon 4 dans le fourreau 5. L'alésage 13 est ménagé dans l'embout 16, parallèlement à l'axe 3, et, il est également prévu un orifice 19 dans la paroi du tube 6 permettant le montage du verrou 7 dans l'alésage 13 jusqu'à une butée 14 ménagée dans l'embout 16 ; pour rendre commode l'utilisation du dispositif de fixation 7-8-9, les orifices 18 et 19 sont sur des faces opposées du tube 6 par rapport à son axe longitudinal.

On voit qu'en l'absence de la clef correspondant spécifiquement au verrou 7, il est impossible de séparer le soubassement de l'ébénisterie du poste de télévision 1 de la platine 2. Les têtes 12a des vis ne sont pas accessibles car elles sont entièrement disposées à' l'intérieur du volume 17. De même il est impossible de désolidariser la platine 2 du bras 6 du fait de la coopération du pêne 8 avec la face plane 9 du manchon 4 et du verrou 7 avec la butée 14, si un mouvement du poste de télévision était tenté vers le haut selon l'axe 3.

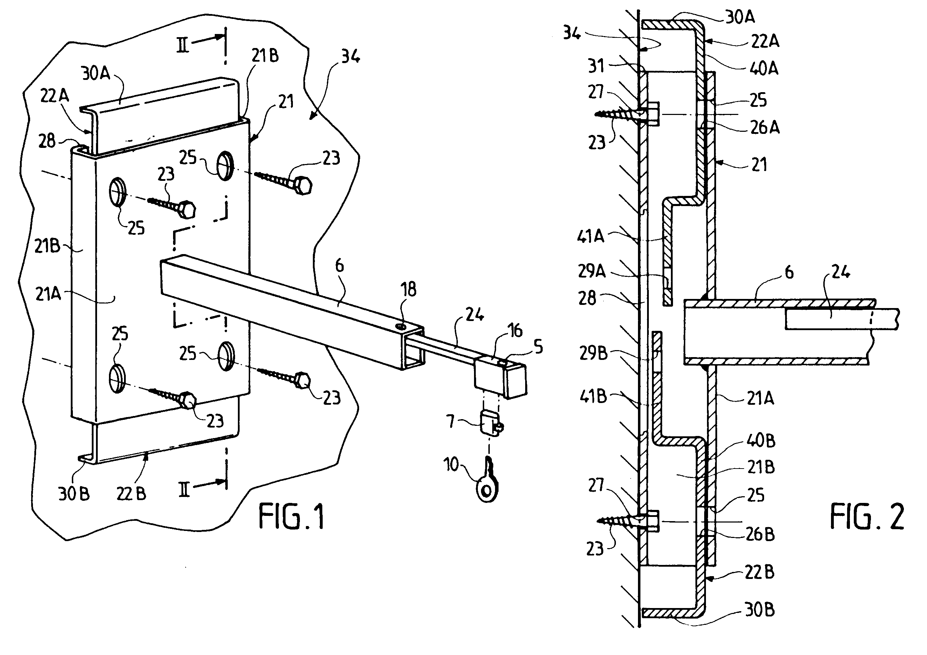

En se reportant aux figures 1 à 3, on voit que l'organe porteur 6 en forme de tube à section rectangulaire est solidaire, à son extrémité, d'une plaque-support 21 en forme générale de U avec une âme 21A et deux ailes 21B prolongées par des retours en équerre 28 parallèles à l'âme 21A. Des moyens de maintien 23, comme des vis par exemple, fixent la plaque-support 21 par ses retours en équerre 28 sur un bâti 34, par exemple une cloison verticale, les retours 28 étant, à cet effet, percés de trous 27. Au droit des moyens de maintien 23, des orifices 25 sont prévus dans l'âme 21A de la plaque-support 21, dans l'axe des trous 27 traversés par les vis 23.

Une plaque-verrou 22A, 22B, en deux pièces, dont la largeur est égale à la largeur de l'intérieur du U de la plaque-support 21, est montée à coulissement dans la glissière que constitue la plaque-support 21. La demi-plaque-verrou 22A comprend deux portions 40A et 41A, parallèles à l'âme 21A, et décalées selon l'axe du tube 6. La portion 40A s'étend le long de l'âme 21A et la portion 41A est proche des retours en équerre 28. De même, la demi-plaque 22B comprend deux portions 40B, 41B analogues aux portions 40A, 41A, la portion 41A étant axialement décalée de manière à être adaptée à recouvrir la portion 41B.

La plaque-verrou 22A, 22B porte des orifices 26A, 26B ménagés dans les portions 40A, 40B, similaires aux orifices 25 de la plaque-support, et susceptibles de venir en vis-à-vis de ceux-ci : c'est la position représentée figure 2 dans laquelle les moyens de maintien 23 sont accessibles, à travers les orifices 25 et 26A, 26B.

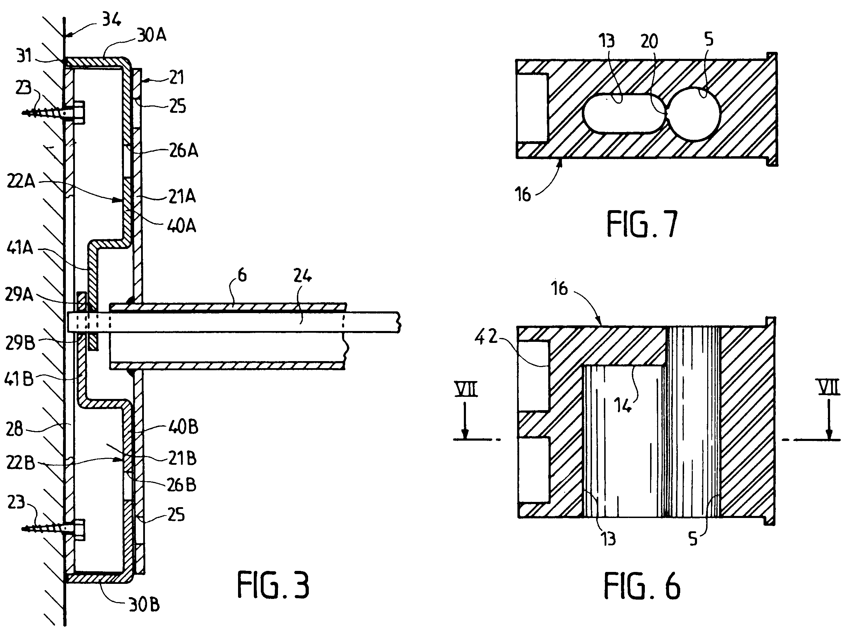

La plaque-verrou 22A, 22B porte également deux orifices 29A, 29B, chacun étant porté par les portions 41A, 41B ; lorsque la plaque-verrou est en position de blocage, ces orifices 29A, 29B sont en coïncidence et au droit de l'extrémité ouverte du tube 6 : c'est la position représentée figure 3.

Chacune des deux portions 40A, 40B se prolonge selon un retour 30A, 30B parallèle à l'axe du tube 6 et s'étendant jusqu'au droit du bord extérieur 31 du retour en équerre 28 de la plaque-support 21 ; dans la position de blocage de cette figure 3, les retours 30A, 30B sont pratiquement au contact des bords extérieurs 31.

Une tige de blocage 24 s'étend à l'intérieur du tube 6 et, en position de blocage, traverse les orifices 29A, 29B de la plaque-verrou, la section des orifices 29A, 29B étant prévue en conséquence ; dans cette position, la tige 24 interdit tout déplacement de la plaque-verrou 22A, 22B par rapport à la plaque-support 21, donc l'accès aux moyens de maintien 23 ; la longueur de la tige 24 est telle que, lorsque l'ensemble est monté, elle bute, d'un côté, contre le bâti 34, et de l'autre côté, contre l'embout 16 qui la reçoit dans un logement 42, figure 4, prévu à cet effet.

On voit que les dispositions décrites ci-dessus verrouillent entièrement l'ensemble-support selon l'invention ; le poste de télévision ne peut pas être désolidarisé de la platine, qui ne peut pas être désolidarisée du bras 6, lequel ne peut pas être désolidarisé du bâti ; et ceci, grâce à un seul dispositif de fixation unique 7-8-9 à clef 10, simple et rapide à mettre en oeuvre. Il est à noter, également, que l'embout 16 ne peut pas être désemmanché du tube 6 : d'une part le manchon 4 traverse la paroi du tube 6 métallique, d'autre part le verrou 7 s'étend au travers de l'orifice 19 de la paroi du tube et affleure sa surface extérieure, comme visible sur la figure 4. La paroi du tube 6 ne comporte que les orifices 18 et 19 qui, comme on vient de le voir, sont occupés par le manchon 4 et le verrou 7.

La figure 8 montre, en perspective, une autre forme de réalisation de solidarisation de l'organe-porteur 6 au bâti 34 lorsque celui-ci est vertical. Selon cette figure, une plaque-support 121 de section en forme générale de U dont l'âme 121A est percée de trous de fixation 127 avec lesquels coopèrent des moyens de maintien 123 constitués de vis à visser dans le bâti 34 ; l'âme 121A se prolonge latéralement par deux ailes 121B à quatre vingt dix degrés, elles-mêmes prolongées par des retours 128 paralèles à l'âme 121A ; un retour 130, à angle droit, de l'âme 121A ferme à la partie inférieure de la plaque-support 121, dans la position où elle est présentée figure 8, les glissières constituées par les prolongements 121B, 128 et l'âme 121A ; ces glissières reçoivent à coulissement une plaque-verrou 122, de forme générale rectangulaire, dont la largeur est légèrement inférieure à la distance qui sépare les prolongements 121B qui se font face. La plaque-verrou 122 porte à sa partie supérieure, dans la position où elle est présentée figure 8, un rebord 135 s'étendant sur toute la largeur de la plaque-verrou 122, ledit rebord 135 venant s'appuyer sur la face en bout 131, supérieure, de la plaque-support 121, lorsque la plaque-verrou 122 est montée dans la plaque-support 121, la plaque-verrou 122 s'étendant alors entre l'âme 121A et les retours 128 de la plaque-support ; l'organe-porteur 6 est solidaire de la plaque-verrou 122, par soudage, la plaque-verrou 122 étant munie d'un passage, à l'intérieur de la zone de raccordement par soudage de l'organe-porteur 6 à la plaque-verrou 122 ; comme décrit précédemment, l'organe 6 est un tube ouvert à ses deux extrémités ; il est traversé par la tige de blocage 24 et porte l'embout 16 recevant le dispositif de fixation dont le verrou 7 à clef 10 ; autour du tube 6, la plaque-verrou 122 est pleine, en sorte que lorsqu'elle est montée dans la plaque-support, elle recouvre les moyens de maintien 123 qui sont, alors, isolés de l'extérieur.

L'âme 121A de la plaque-support 121 est percée en 133 ; ce perçage 133 est bordé par une plaquette de renforcement 132 soudée à l'âme 121A ; le perçage 133 reçoit l'extrémité de la tige de blocage 24 et, lorsque l'ensemble est monté, permet le verrouillage de l'ensemble en bloquant la plaque-verrou 122 par rapport à la plaque-support 121.

La figure 9 montre l'application de l'invention au cas où le bâti est horizontal, par exemple un plafond 234. La plaque-support 121 est fixée en 123 au plafond 234. La plaque-verrou 122 est montée dans la plaque-support 121 et repose sur les retours 128 de celle-ci ; le rebord 135 est en butée sur la face latérale de la plaque-support et ferme l'ensemble. Ici, le tube 6 comprend deux portions formant un coude à angle droit : une portion 6A, verticale, solidaire de la plaque-verrou 122, et une portion horizontale 6B dont l'extrémité non représentée, vers la droite de la figure 9, porte l'embout 16. La tige de blocage est en deux pièces : une première pièce 24A, verticale en butée, d'une part, vers le haut contre l'âme de la plaque-support 121, à gauche, sur la figure 9, d'une cale 232 solidaire de ladite âme, et, d'autre part, vers le bas sur la deuxième pièce 24B, horizontale, de la tige de blocage. La première pièce 24A a été introduite verticalement par un passage 206 ménagé à la partie inférieure du tube 6, ledit passage étant ensuite obstrué par la deuxième pièce 24B lorsqu'elle est mise en place. Une telle disposition fonctionne comme celle décrite précédemment, la première pièce de tige 24A verrouillant le déplacement latéral relatif des plaques 121, 122, grâce à sa venue en butée sur la cale 232, et la deuxième pièce de tige 24B verrouillant la première pièce 24A dans cette position, par coopération sur la droite de la figure 9 avec l'embout 16 et sur la gauche avec la paroi intérieure de la portion 6A du tube 6.

Bien entendu, une fixation analogue à un support horizontal tel que le plafond 234 peut être obtenue de manière analogue avec l'ensemble décrit à propos des figures 1 à 7.

## Revendications

1. Ensemble-support pour poste de télévision (1) solidarisé à un organe porteur (6), comportant une plaque-support (21, 121) destinée à être fixée sur un bâti (34, 234) par des moyens de maintien (23, 123) susceptibles d'être démontés lorsqu'ils sont accessibles, une plaque-verrou (22A, 22B, 122), liée mécaniquement à la plaque-support (21, 121), et susceptible d'être bloquée par un moyen de blocage (24, 24A, 24B) par rapport à la plaque-support (21, 121) et pouvant, en l'absence du blocage, être déplacée par rapport à ladite plaque-support (21, 121), ce déplacement établissant ou supprimant l'accessibilité aux moyens de maintien (23, 123), la position de blocage de la plaque-verrou (22A, 22B, 122) correspondant à la suppression de cette accessibilité par dissimulation des moyens de maintien (23, 123), l'organe-porteur (6) étant un tube dont les deux extrémités sont ouvertes et permettent le passage du moyen de blocage (24, 24A, 24B) prévu en forme de tige pour le blocage de la plaque-verrou (22A, 22B, 122), l'organe-porteur (6) étant solidaire de l'une des plaques, la plaque-support (21) ou la plaque-verrou (122), caractérisé par le fait qu'en position de blocage, l'organe de blocage (24, 24A, 24B) en forme de tige est en butée d'un côté avec le bâti (34) ou la plaque-support (21, 121), et de l'autre côté avec un embout (16) emmanché dans l'extrémité ouverte du tube (6) opposée à l'extrémité par laquelle le tube (6) est solidarisé à l'une des plaques, la plaque-support (21, 121) ou la plaque-verrou (22A, 22B, 122), l'embout (16) étant fixé au tube (6) par un dispositif de fixation (7-8-9), l'ensemble-support comportant une platine (2) portant le poste de télévision (1) et susceptible de pivoter autour de l'axe (3) d'un fourreau (5) solidaire de l'organe porteur (6), la solidarisation de la platine (2) avec ledit organe porteur (6) étant assurée au moyen du dispositif de fixation (7-8-9), la platine étant équipée d'un manchon (4) susceptible de tourillonner dans le fourreau (5), ledit fourreau (5) étant prévu dans l'embout (16).

2. Ensemble-support selon la revendication 1, caractérisé par le fait que l'organe-porteur (6) est solidaire de la plaque-support (21).

3. Ensemble-support selon la revendication 1, caractérisé par le fait que la plaque-support (21) est en forme de glissière dans laquelle peut coulisser la plaque-verrou (22A, 22B), la plaque-support (21) et la plaque-verrou (22A, 22B) comportant chacune des premiers orifices (25, 26A, 26B) susceptibles de venir en vis-à-vis quand la plaque-verrou (22A, 22B) n'est pas en position de blocage et permettant, alors, l'accessibilité aux moyens de maintien (23).

4. Ensemble-support selon l'une des revendications 1 à 3, caractérisé par le fait que les moyens de maintien (23) de la plaque-support (21) sont placés au droit des orifices (25) de la plaque-support, les moyens de maintien (23) et les orifices (25) de la plaque-support étant situés de part et d'autre de la plaque-verrou (22A, 22B).

5. Ensemble-support selon l'une des revendications 1 à 4, caractérisé par le fait que la plaque-support (21) est un profilé en forme générale de U dont l'âme (21 A) porte les orifices (25) et dont les ailes (21B) se prolongent par des retours en équerre (28) par lesquels la plaque-support (21) est fixée au bâti (34), lesdits retours en équerre (28) comportant des trous de fixation (27) avec lesquels coopérent les moyens de maintien (23), les trous (27) et les orifices (25) étant en vis-à-vis les uns des autres.

6. Ensemble-support selon l'une des revendications 1 à 5, caractérisé par le fait que la plaque-verrou (22A, 22B, 122) porte un second orifice (29A, 29B) dont la section correspond à la section de la tige, l'organe de blocage (24) traversant le second orifice (29A, 29B) dans la position de blocage de la plaque-verrou (22A, 22B).

7. Ensemble-support selon l'une des revendications 1 à 6, caractérisé par le fait que la plaque-verrou (22A, 22B) est en deux pièces, chacune des deux pièces portant au moins un premier orifice (26A, 26B), et un second orifice (29A, 29B).

8. Ensemble-support selon la revendication 7, caractérisé par le fait que chacune des deux pièces de la plaque-verrou (22A, 22B) comprend deux portions décalées selon l'axe du tube (6), l'une des portions (40A, 40B) portant le premier orifice (26A, 26B) étant proche de l'âme de la plaque-support et l'autre portion portant le second orifice (29A, 29B) étant proche des retours en équerre (28) de la plaque-support.

9. Ensemble-support selon l'une des revendications 7 ou 8, caractérisé par le fait que chacune des deux portions (40A, 40B) proches de l'âme de la plaque-support se prolonge selon un retour (30A, 30B), parallèle à l'axe du tube (6), s'étendant jusqu'au droit du bord extérieur (31) du retour en équerre (28) de la plaque-support (21).

10. Ensemble-support selon la revendication 1, caractérisé par le fait que l'organe-porteur (6) est solidaire de la plaque-verrou (122).

11. Ensemble-support selon la revendication 10, caractérisé par le fait que la plaque-support (121) est de forme générale en U dont l'âme (121A) est percée de trous de fixation (127) et se prolonge latéralement par deux ailes (121B) elles-mêmes prolongées par des retours (128) parallèles à l'âme (121A), les prolongements (121B, 128) et l'âme (121A) constituant des glissières adaptées à recevoir à coulissement la plaque-verrou (122).

12. Ensemble-support selon la revendication 11, caractérisé par le fait qu'un retour (130) à angle droit de l'âme (121A) ferme lesdites glissières lorsque la plaque-verrou (122) est montée dans la plaque-support (121).

13. Ensemble-support selon la revendication 11, caractérisé par le fait que la plaque-verrou (122) porte un rebord (135) venant s'appuyer sur la face en bout (131) de la plaque-support (121).

14. Ensemble-support pour poste de télévision selon la revendication 10, caractérisé par le fait que la plaque-verrou (122) est pleine et ne comporte qu'un passage prévu, à l'intérieur de la zone où elle est raccordée par soudage à l'organe-porteur (6), pour le passage de la tige de blocage 24.

15. Ensemble-support selon l'une des revendications 1 à 14, caractérisé par le fait que le tube (6) comprend deux portions (6A, 6B) formant un angle entre elles : une portion (6A) solidaire de la plaque-support (21, 121) ou de la plaque-verrou (22A, 22B, 122) et une portion (6B) dont l'extrémité porte l'embout (16).

16. Ensemble-support selon la revendication 15, caractérisé par le fait que l'organe de blocage est en deux pièces (24A,24B), une première pièce (24A) verrouillant le déplacement latéral relatif des plaques grâce à une cale (232) solidaire de la plaque-support (21, 121), et une deuxième pièce (24B) verrouillant la première pièce (24A) par coopération avec l'embout (16) et la paroi intérieure de la portion (6A) du tube (6), un passage (206) ménagé dans le tube (6) permettant le montage de la première pièce (24A) et étant obstrué par la deuxième pièce (24B) lorsque l'ensemble est monté.

17. Ensemble-support selon l'une des revendications 1 à 16, caractérisé par le fait que le dispositif de fixation (7-8-9) comprend un verrou (7) muni d'un pêne (8), le verrou (7) étant logé dans un alésage (13) correspondant de l'embout (16), des orifices (18, 19) étant prévus dans la paroi du tube (6) disposés au droit, respectivement, du fourreau (5) et de l'alésage (13), l'alésage (13) ayant un fond (14) sur lequel vient buter le verrou (7) lorsqu'il est en position de verrouillage de la fixation, position dans laquelle le pêne (8) est à l'extérieur du verrou (7) et vient coopérer du côté opposé à celui qui fait face à la platine avec une butée (9) du manchon (4) s'étendant perpendiculairement à l'axe (3) dudit manchon, le fourreau (5) et l'alésage (13) communiquant par un passage (20) traversé par le pêne (8) en position de verrouillage.

18. Ensemble-support selon la revendication 17, caractérisé par le fait que le manchon (4) est cylindrique et comporte une partie (15) de plus petit diamètre que le diamètre du reste du manchon dans laquelle peut se loger le pêne (8), la butée (9) étant définie par l'une des faces perpendiculaires à l'axe de raccordement de cette partie (15) de plus petit diamètre avec le reste du manchon.

## Claims

1. Support assembly for a television set (1), integrally attached to a bearing member (6), including a support plate (21, 121) intended to be fixed on a frame (34, 234) by holding means (23, 123) which can be dismounted when they are accessible, a bolt plate (22A, 22B, 122) mechanically connected to the support plate (21, 121) and capable of being blocked by a blocking means (24, 24A, 24B) with respect to the support plate (21, 121) and capable, in the absence of blocking, of being moved with respect to the said support plate (21, 121), this movement establishing or removing accessibility to the holding means (23, 123), the blocking position of the bolt plate (22A, 22B, 122) corresponding to removal of this accessibility by concealment of the holding means (23, 123), the bearing member (6) being a tube, the two ends of which are open and allow passage of the blocking means (24, 24A, 24B) provided in the form of a rod for blocking the bolt plate (22A, 22B, 122), the bearing member (6) being integral with one of the plates, the support plate (21) or the bolt plate (122), characterized in that, in the blocking position, the blocking member (24, 24A, 24B) in the form of a rod is in abutment on one side with the frame (34) or the support plate (21, 121) and, on the other side, with an end-piece (16) slipped into the open end of the tube (6) opposite the end by which the tube (6) is integrally attached to one of the plates, the support plate (21, 121) or the bolt plate (22A, 22B, 122), the end-piece (16) being fixed to the tube (6) by a fastening device (7-8-9), the support assembly including a panel (2) bearing the television set (1) and capable of pivoting about the axis (3) of a bush (5) integral with the bearing member (6), the panel (2) being integrally attached to the said bearing member (6) by means of the fastening device (7-8-9), the panel being equipped with a sleeve (4) capable of journalling in the bush (5), the said bush (5) being provided in the end-piece (16).

2. Support assembly according to Claim 1, characterized in that the bearing member (6) is integral with the support plate (21).

3. Support assembly according to Claim 1, characterized in that the support plate (21) is in the form of a slideway in which the bolt plate (22A, 22B) can slide, the support plate (21) and the bolt plate (22A, 22B) each including first orifices (25, 26A, 26B) which can be brought opposite one another when the bolt plate (22A, 22B) is not in the blocking position and then allowing accessibility to the holding means (23).

4. Support assembly according to one of Claims 1 to 3, characterized in that the holding means (23) of the support plate (21) are placed in line with the orifices (25) in the support plate, the holding means (23) and the orifices (25) of the support plate being located on either side of the bolt plate (22A, 22B).

5. Support assembly according to one of Claims 1 to 4, characterized in that the support plate (21) is a generally U-shaped section, the web (21A) of which carries the orifices (25) and the wings (21B) of which are extended by right-angled returns (28) by which the support plate (21) is fixed to the frame (34), the said right-angled returns (28) including fastening holes (27) with which the holding means (23) cooperate, the holes (27) and the orifices (25) facing each other.

6. Support assembly according to one of Claims 1 to 5, characterized in that the bolt plate (22A, 22B, 122) carries a second orifice (29A, 29B), the cross-section of which corresponds to the cross-section of the rod, the blocking member (24) passing through the second orifice (29A, 29B) in the blocking position of the bolt plate (22A, 22B).

7. Support assembly according to one of Claims 1 to 6, characterized in that the bolt plate (22A, 22B) is in two parts, each of the two parts carrying at least a first orifice (26A, 26B) and a second orifice (29A, 29B).

8. Support assembly according to Claim 7, characterized in that each of the two parts of the bolt plate (22A, 22B) comprises two portions offset along the axis of the tube (6), one of the portions (40A, 40B) carrying the first orifice (26A, 26B) being close to the web of the support plate and the other portion carrying the second orifice (29A, 29B) being close to the right-angled returns (28) of the support plate.

9. Support assembly according to one of Claims 7 or 8, characterized in that each of the two portions (40A, 40B) close to the web of the support plate is extended along a return (30A, 30B), parallel to the axis of the tube (6), running as far as the outer edge (31) of the right-angled return (28) of the support plate (21).

10. Support assembly according to Claim 1, characterized in that the bearing member (6) is integral with the bolt plate (122).

11. Support assembly according to Claim 10, characterized in that the support plate (121) is of general U-shape, the web (121A) of which is pierced with fastening holes (127) and is laterally extended by two wings (121B), themselves extended by returns (128) parallel to the web (121A), the extensions (121B, 128) and the web (121A) constituting slideways designed to receive the bolt plate (122) such that it can slide.

12. Support assembly according to Claim 11, characterized in that a return (130) at right angles to the web (121A) closes the said slideways when the bolt plate (122) is mounted in the support plate (121).

13. Support assembly according to Claim 11, characterized in that the bolt plate (122) carries a lip (135) which comes to bear on the end-face (131) of the support plate (121).

14. Support assembly for a television set according to Claim 10, characterized in that the bolt plate (122) is solid and includes only one passage provided, inside the zone where it is connected by welding to the bearing member (6), for passage of the blocking rod (24).

15. Support assembly according to one of Claims 1 to 14, characterized in that the tube (6) comprises two portions (6A, 6B) forming an angle between them: a portion (6A) integral with the support plate (21, 121) or with the bolt plate (22A, 22B, 122) and a portion (6B), the end of which bears the end-piece (16).

16. Support assembly according to Claim 15, characterized in that the blocking member is in two parts (24A, 24B), a first part (24A) which locks relative lateral movement of the plates by virtue of a wedge (232) integral with the support plate (21, 121), and a second part (24B) which locks the first part (24A) by cooperation with the end-piece (16) and the inner wall of the portion (6A) of the tube (6), a passage (206) made in the tube (6) allowing mounting of the first part (24A) and being obstructed by the second part (24B) when the assembly is mounted.

17. Support assembly according to one of Claims 1 to 16, characterized in that the fastening device (7-8-9) comprises a bolt (7) fitted with a latch (8), the bolt (7) being housed in a corresponding bore (13) of the end-piece (16), orifices (18, 19) being provided in the wall of the tube (6) and arranged in line, respectively, with the bush (5) and the bore (13), the bore (13) having a bottom (14) on which the bolt (7) abuts when it is in the position for locking the fastening, in which position the latch (8) is outside the bolt (7) and cooperates, on the side opposite the one facing the panel, with a stop (9) of the sleeve (4), running perpendicularly to the axis (3) of the said sleeve, the bush (5) and the bore (13) communicating via a passage (20) through which the latch (8) passes in the locking position.

18. Support assembly according to Claim 17, characterized in that the sleeve (4) is cylindrical and includes a region (15), of diameter smaller than the diameter of the rest of the sleeve, in which the latch (8) can be housed, the stop (9) being defined by one of the faces perpendicular to the axis of connection of this region (15) of smaller diameter to the rest of the sleeve.

## Patentansprüche

1. Tragvorrichtung für einen Fernsehapparat (1), der an einem Tragteil (6) befestigt ist, mit einer Tragplatte (21, 121), die an einem Tragelement (34, 234) mittels Halteeinrichtungen (23, 123) fixierbar ist, die demontierbar sind, wenn sie zugänglich sind, mit einer Verschlußplatte (22A, 22B, 122), die mechanisch mit der Tragplatte (21, 121) verbunden ist und mittels einer Verriegelungseinrichtung (24, 24A, 24B) an der Tragplatte (21, 121) verriegelbar ist, und die nach Entfernung der Verriegelung relativ zu der Tragplatte (21, 121) verschiebbar ist, wobei diese Verschiebung den Zugang zu den Halteeinrichtungen (23, 123) ermöglicht oder verhindert, wobei die Position der Verriegelung der Verschlußplatte (22A, 22B, 122) der Verhinderung dieser Zugänglichkeit durch eine Abdeckung der Halteeinrichtungen entspricht, wobei das Tragteil (6) ein Rohr ist, dessen beide Enden offen sind und den Durchgang der Verriegelungseinrichtung (24, 24A, 24B) ermöglichen, die in Form einer Stange zur Verriegelung der Verschlußplatte 22A, 22B, 122) vorgesehen ist, wobei das Tragteil (6) einstückig mit einer der beiden Platten, also entweder der Tragplatte (21) oder der Verschlußplatte (122) ausgebildet ist, dadurch gekennzeichnet, daS sich in der Verriegelungsposition das Verriegelungselement (24, 24A, 24B) in Form der Stange in Anschlag einerseits mit dem Tragelement (34) oder der Tragplatte (21, 121) und andererseits mit einem Ansatzstück (16) befindet, das in ein offenes Ende des Rohres (6) gegenüber dem Ende eingesteckt ist, mit welchem das Rohr (6) an einer der Platten, also entweder der Tragplatte (21, 121) oder der Verschlußplatte (22A, 22B, 122) angebracht ist, wobei das Ansatzstück (16) am Rohr (6) mittels einer Fixiervorrichtung (7-8-9) fixiert ist, wobei die Tragvorrichtung eine Halteplatte (2) aufweist, die den Fernsehapparat (1) trägt und um die Achse (3) einer Hülse (5) drehbar ist, die einstückig mit dem Tragteil (6) ausgebildet ist, wobei die Verbindung der Halteplatte (2) mit der Tragplatte (6) mittels der Fixiervorrichtung (7-8-9) sichergestellt ist, und wobei die Halteplatte mit einer Muffe (4) versehen ist, die in der Hülse (5) drehbar ist, wobei die Hülse (5) im Ansatzstück (16) angeordnet ist.

2. Tragvorrichtung nach Anspruch 1, dadurch gekennzeichnet, daß das Tragteil (6) einstückig mit der Tragplatte (21) ist.

3. Tragvorrichtung nach Anspruch 1, dadurch gekennzeichnet, daß die Tragplatte (21) als Gleitschiene ausgebildet ist, in der die Verschlußplatte (22A, 22B) gleiten kann, wobei die Tragplatte (21) und die Verschlußplatte (22A, 22B) jeweils eine von ersten Ausnehmungen (25, 26A, 26B) aufweisen, die fluchtend zueinander ausrichtbar sind, wenn die Verschlußplatte (22A, 22B) nicht in ihrer Riegelposition angeordnet ist und dementsprechend den Zugang zu den Haltevorrichtungen (23) ermöglicht.

4. Tragvorrichtung nach einem der Ansprüche 1 bis 3, dadurch gekennzeichnet, daß die Halteeinrichtungen (23) der Tragplatte (21) fluchtend zu den Ausnehmungen (25) der Tragplatte angeordnet sind, wobei die Halteeinrichtungen (23) und die Ausnehmungen (25) der Tragplatte beiderseits der Verschlußplatte (22A, 22B) angeordnet sind.

5. Tragvorrichtung nach einem der Ansprüche 1 bis 4, dadurch gekennzeichnet, daß die Tragplatte (21) im wesentlichen als U-Profil ausgebildet ist, dessen Kern (21A) die Ausnehmungen (25) aufweist und dessen Schenkel (21B) sich in Winkelstegen (28) fortsetzen, mittels der die Halteplatte (21) am Tragelement (34) fixiert ist, wobei die Winkelstege (28) Befestigungslöcher (27) aufweisen, mit denen die Halteeinrichtungen (23) Zusammenwirken, wobei die Löcher (27) und die Ausnehmungen (25) einander gegenüber angeordnet sind.

6. Tragvorrichtung nach einem der Ansprüche 1 bis 5, dadurch gekennzeichnet, daß die Verschlußplatte (22A, 22B, 122) eine zweite Ausnehmung (29A, 29B) aufweist, deren Querschnitt dem Querschnitt der stange entspricht, wobei das Verriegelungselement (24) durch die zweite Ausnehmung (29A, 29B) in der Riegelstellung der Verschlußplatte (22A, 22B) hindurchverläuft.

7. Tragvorrichtung nach einem der Ansprüche 1 bis 6, dadurch gekennzeichnet, daß die Verschlußplatte (22A, 22B, 122) aus zwei Teilen besteht, wobei jedes der zwei Teile zumindestens eine erste Ausnehmung (26A, 26B) und eine zweite Ausnehmung (29A, 29B) aufweist.

8. Tragvorrichtung nach Anspruch 7, dadurch gekennzeichnet, daß jedes der zwei Teile der Verschlußplatte (22A, 22B) zwei gegenüber der Achse des Rohres (6) versetzte Bereiche aufweist, wobei einer der Bereiche (40A, 40B) die erste Ausnehmung (26A, 26B) nahe dem Kern der Halteplatte aufweist, und wobei der andere Bereich die zweite Ausnehmung (29A, 29B) nahe der Winkelstege (28) der Halteplatte aufweist.

9. Tragvorrichtung nach Anspruch 7 oder 8, dadurch gekennzeichnet, daß jeder der zweiten Bereiche (40A, 40B) nahe dem Kern der Halteplatte sich gemäß einem Steg (30A, 30B) parallel zur Achse des Rohres (6) fortsetzt, der sich bis zum Außenrand (31) des Winkelsteges (28) der Tragplatte (21) erstreckt.

10. Tragvorrichtung nach Anspruch 1, dadurch gekennzeichnet, daß das Tragteil (6) einstückig mit der Verschlußplatte (122) ausgebildet ist.

11. Tragvorrichtung nach Anspruch 10, dadurch gekennzeichnet, daß die Tragplatte (121) im wesentlichen eine U-Form aufweist, deren Kern (121A) mit Fixierungslöchern (127) versehen ist und sich seitlich in zwei Stegen (121B) fortsetzt, die sich wiederum in parallel zum Kern (121A) angeordneten Stegen (128) fortsetzen, wobei die Fortsätze (121B, 128) und der Kern (121A) Gleitschienen bilden, die zur gleitbeweglichen Aufnahme der Verschlußplatte (122) vorgesehen sind.

12. Tragvorrichtung nach Anspruch 11, dadurch gekennzeichnet, daß ein Steg (130) im rechten Winkel zum Kern (121A) die Gleitschienen schließt, wenn die Verschlußplatte (122) in der Tragplatte (121) angeordnet ist.

13. Tragvorrichtung nach Anspruch 11, dadurch gekennzeichnet, daß die Verschlußplatte (122) eine Randleiste (135) aufweist, die an der Stirnfläche (131) der Tragplatte (121) anlegbar ist.

14. Tragvorrichtung für einen Fernsehapparat nach Anspruch 10, dadurch gekennzeichnet, daß die Verschlußplatte (122) vollwandig ausgebildet ist und nur einen Kanal im Inneren des Bereiches, an dem sie mittels einer Schweissung am Tragteil (6) befestigt ist, zum Durchtritt der Riegelstange (24) aufweist.

15. Tragvorrichtung nach einem der Ansprüche 1 bis 14, dadurch gekennzeichnet, daß das Rohr (6) zwei Bereiche (6A, 6B) aufweist, die einen Winkel zwischeneinander einschließen: einen Bereich (6A), der einstückig mit der Tragplatte (21, 121) oder der Verschlußplatte (22A, 22B, 122) ausgebildet ist, und einen Bereich (6B), dessen Ende das Ansatzstück (16) aufweist.

16. Tragvorrichtung nach Anspruch 15, dadurch gekennzeichnet, daß das Verriegelungselement aus zwei Teilen (24A, 24B) besteht, wobei ein erstes Teil (24A) die seitliche Verschiebung relativ zu den Platten mittels eines Keiles (232), der einstückig an der Tragplatte (21, 121) angebracht ist, sperrt, und wobei ein zweites Teil (24B) das erste Teil (24A) durch Zusammenwirkung mit dem Ansatz (16) und der Innenwand des Bereiches (6A) des Rohres (6) sperrt, wobei ein Kanal (206) im Rohr (6) angeordnet ist, der die Montage des ersten Teiles (24A) ermöglicht, und der vom zweiten Teil (24B) verschlossen wird, wenn die Anordnung montiert ist.

17. Tragvorrichtung nach einem der Ansprüche 1 bis 16, dadurch gekennzeichnet, daß die Fixiervorrichtung (7-8-9) einen Verschluß (7) mit einem Riegel (8), wobei der Verschluß (7) in einer Bohrung (13) entsprechend dem Ansatzstück (16) angeordnet ist, und Ausnehmungen (18, 19) aufweist, die in der Wand des Rohres (6) vorgesehen sind und jeweils fluchtend zur Hülse (5) und zur Bohrung (13) angeordnet sind, wobei die Bohrung (13) einen Boden (14) aufweist, auf dem der Verschluß (7) zur Anlage gelangt, wenn er sich in der Riegelstellung der Fixation befindet, einer Position, in der der Riegel (8) außerhalb des Verschlusses (7) angeordnet ist und mit der Seite zusammenwirkt, die derjenigen gegenüberliegt, die an der Platte mit einem Anschlag (9) der Muffe (4) anliegt, die sich im rechten Winkel zur Achse (3) der Muffe (4) erstreckt, wobei die Hülse (5) und die Bohrung (13) über einen Kanal (20) miteinander in Verbindung stehen, der von dem Riegel (8) in der Riegelstellung durchdrungen ist.

18. Tragvorrichtung nach Anspruch 17, dadurch gekennzeichnet, daß die Muffe (4) zylindrisch ist und einen Teil (15) mit kleinerem Durchmesser als dem Durchmesser des Restes der Muffe aufweist, in dem der Riegel (8) plazierbar ist, wobei der Anschlag (9) von einer der Flächen, die rechtwinklig zur Verbindungsachse dieses Teils (15) mit kleinerem Durchmesser als dem Rest der Muffe sind, gebildet wird.
